(19) Europäisches Patentamt
European Patent Office
Office européen des brevets

(11) **EP 3 168 804 A1**

(12) **EUROPEAN PATENT APPLICATION**

(43) Date of publication:
**17.05.2017 Bulletin 2017/20**

(51) Int Cl.:
*G06Q 30/02* (2012.01)    *G06Q 30/06* (2012.01)
*H04N 21/466* (2011.01)    *G06F 17/30* (2006.01)

(21) Application number: **15306792.1**

(22) Date of filing: **12.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LE ROUX, Mikel**
  **35576 Cesson-Sévigné (FR)**
• **MORIN, Thomas**
  **35576 Cesson-Sévigné (FR)**
• **JEGOU, Karine**
  **35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **APPARATUS AND METHOD FOR OPERATING A RECOMMENDER DEVICE**

(57)    A method for operating a recommender device (100) particularly suited for recommending movies best rated by users having similar profiles but different viewing history, allowing out-of-the box movie recommendations. A processor (110) of an apparatus (100) obtains (341) a new rating value about a movie of a specific genre for a first user, updates (430) the user profile by averaging, according the movie genre, the difference between the ratings of the movie by first user and the ratings of the movie by a plurality of users, selects (510) a set of similar user from the plurality of users, wherein the similarity between the profile of selected users and the profile of first user is greater than a similarity threshold, determines (520) a list of best rated movies, wherein the list is comprising movies that have been rated by the set of selected users and whose rating value is higher than a minimal rating threshold, removes (530) from the list of selected movies the movies already watched by the first user, and provides (370) the list of selected movies to the first user as a recommendation list. A device implementing the method is also disclosed.

Figure 2

EP 3 168 804 A1

**Description**

TECHNICAL FIELD

The present disclosure relates to the domain of movie recommendation based on user similarities and more precisely describes an apparatus and a method for operating a movie recommender device utilizing a user profile of the movie genres extracted from the movies ratings provided by the user.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Recommending items is popular in today's connected world where a myriad of choices are available, for example on merchant sites selling physical goods such as Amazon (amazon.com), on movie streaming services such as M-GO (mgo.com), or also on web sites dedicated to services such as restaurants, tourist sites, theatres, etc. This is the purpose of a recommender system that proposes to a customer a product that might be of interest for him. For the customer, it saves either lengthy navigation on a provider website, going through multiple lists of items or search operations that sometimes provide unsatisfying results. The disclosure focuses on the movie recommendation domain but the principles described apply to other domains of recommendation.

The prior art comprises a number of different solutions that allow the recommendation of movies. These solutions are generally based on the interactions performed by users on the movies themselves, including watching, storing, commenting as well as rating them. Ratings are the most interesting interaction for a recommender system since they characterize the relationship between a user and a movie by giving an indication on how much a given user likes a given movie. Ratings are generally internally represented by a matrix between users and movies, in which a cell indicates a given user's interest in a given movie through a numerical value. For example, a rating value varies between "1" when the user does not like the movie to "5" for his preferred movies. A specific value, for example "0", indicates that the user did not yet rate this movie. Conventionally, the size of a rating matrix is huge, with potentially millions of users and millions of movies.

Rating data are sometimes used by providers for catalogue browsing by arranging the list of movies according to decreasing average rating values. Such a technique can be efficient for a low number of movies but does not scale; when dealing with large number of movies, recommender systems are helpful to guide the user through this myriad of choices.

One common technique for a recommender system is to recommend movies that are similar to movies that the user likes. For that purpose, movies are clustered, for example by similarities according to some parameters such as the movie genre, the director, the actors, etc. The suggestions provided to the users are done by picking the items with highest ratings in the cluster where the user has set his highest ratings. However, this technique restricts the user to a cluster of similar items and does not allow to recommend items that are out of the box. To overcome this issue, another common solution, known in the literature as "collaborative filtering", consists in a first step of establishing similarities between users according to the similarity of their movie ratings and then of recommending the best rated movies of similar users. However, calculating similarities between users from the movie ratings is a complex operation requiring intense processing resources to analyse the complete rating matrix.

It can therefore be appreciated that there is a need for a solution for movie recommendation that addresses at least some of the problems of the prior art. The present disclosure provides such a solution.

SUMMARY

The present disclosure is about a method and an apparatus for operating a recommender system generating movie recommendations based on user similarities and more precisely utilizing a user profile of the movie genres extracted from the movies ratings provided by the user, the movie recommendations being displayed to the user through the device utilized to obtain movies. A salient idea of the disclosure is to establish a user profile based on the overrating or underrating of movies by the user compared to the average ratings of all users and averaging this overrating/underrating per movie genre. Such profile allows to consider similarity between users in terms of differences against the average users. Two users may be close event if did not watch the same movies. This allows "out-of-the-box" recommendations.

In a first aspect, the disclosure is directed to a method for operating a recommender system for a plurality of elements associated with categories, comprising at a processor of a recommender device determining a profile of a first user by computing, for each element rated by the first user, a difference between a rating given by the first user and an average of ratings given by a plurality of further users, and averaging the differences according the plurality of categories of the elements; selecting a set of similar users, by computing a similarity level between profiles of the plurality of further users and the profile of first user and choosing the users for which the similarity is greater than a similarity threshold; determining a list of best rated elements, the list comprising elements that have been rated by the set of similar users and whose rating value is higher than a minimal rating threshold; removing elements already consumed or rated by the first user from the list of best rated elements to obtain a recommendation list; and providing the recommendation list to the first user.

In a preferred embodiment of the first aspect, the elements are movies and the categories are chosen among movie genres, directors, actors, age restrictions, date. Various other embodiments of the first aspect comprise:

- computing the profile similarity using discrete cosine technique and the similarity threshold is a cosine factor;
- selecting the set of similar users and determining a list of best rated elements are iterative and comprise adapting threshold parameters until the number of best rated elements not already consumed or rated by the first user is comprised in a range of values, the adaptation comprising weakening or strengthening threshold parameters comprising the similarity threshold parameter used to select similar users and the minimal rating threshold parameter used to obtain the best rated elements; and
- adapting the threshold parameters in the iteration by alternating between adapting the similarity threshold and adapting the minimal rating threshold.

In a second aspect, the disclosure is directed to a data processing apparatus for recommending elements to users, comprising a processor configured to determine a profile of a first user by computing, for each element rated by the first user, a difference between a rating given by the first user and an average of ratings given by a plurality of further users, and averaging the differences according the plurality of categories of the elements, select a set of similar users, by computing a similarity level between profiles of the plurality of further users and the profile of first user and choosing the users for which the similarity is greater than a similarity threshold, determine a list of best rated elements, the list comprising elements that have been rated by the set of similar users and whose rating value is higher than a minimal rating threshold, remove elements already consumed or rated by the first user from the list of best rated elements to obtain a recommendation list, and a network interface configured to obtain the average of ratings given by the plurality of further users and provide the recommendation list to the first user.

In a preferred embodiment of the second aspect, the elements are movies and the categories are chosen among movie genres, directors, actors, age restrictions, date. Various other embodiments of the second aspect comprise:

- computing the profile similarity using discrete cosine technique and the similarity threshold is a cosine factor;
- selecting the set of similar users and determining a list of best rated elements are iterative and comprise adapting threshold parameters until the number of best rated elements not already consumed or rated by the first user is comprised in a range of values, the adaptation comprising weakening or strengthening threshold parameters comprising the similarity threshold parameter used to select similar users and the minimal rating threshold parameter used to obtain the best rated elements; and
- adapting the threshold parameters in the iteration by alternating between adapting the similarity threshold and adapting the minimal rating threshold.

In a third aspect, the disclosure is directed to a computer program comprising program code instructions executable by a processor for implementing any embodiment of the method of the first aspect.

In a fourth aspect, the disclosure is directed to a computer program product which is stored on a non-transitory computer readable medium and comprises program code instructions executable by a processor for implementing any embodiment of the method of the first aspect.

BRIEF DESCRIPTION OF DRAWINGS

Preferred features of the present disclosure will now be described, by way of non-limiting example, with reference to the accompanying drawings, in which

Figure 1 illustrates an exemplary apparatus in which the disclosure may be implemented;
Figure 2 illustrates an exemplary system architecture in which the disclosure may be implemented;
Figure 3 illustrates an example of a sequence diagram of interactions required to operate the recommender system;
Figure 4 illustrates an example of sequence diagram of the succession of updates performed by the recommender device;

Figure 5A illustrates an example of sequence diagram of the recommendation operation performed by the recommender device;

Figure 5B illustrates a second example of sequence diagram of the recommendation operation performed by the recommender device that includes an iteration loop to deliver the appropriate number of elements;

Figure 6 illustrates an example of alternative parameter adjustment, both for strengthening and for weakening the parameters;

Figure 7 illustrates a table that highlights the effects of the disclosure principle on user similarity using an invented example made of a simple set of users and movies; and

Figure 8 illustrates an example of user interface displayed on the screen of the user device where a movie recommendation is provided to the user.

<u>DESCRIPTION OF EMBODIMENTS</u>

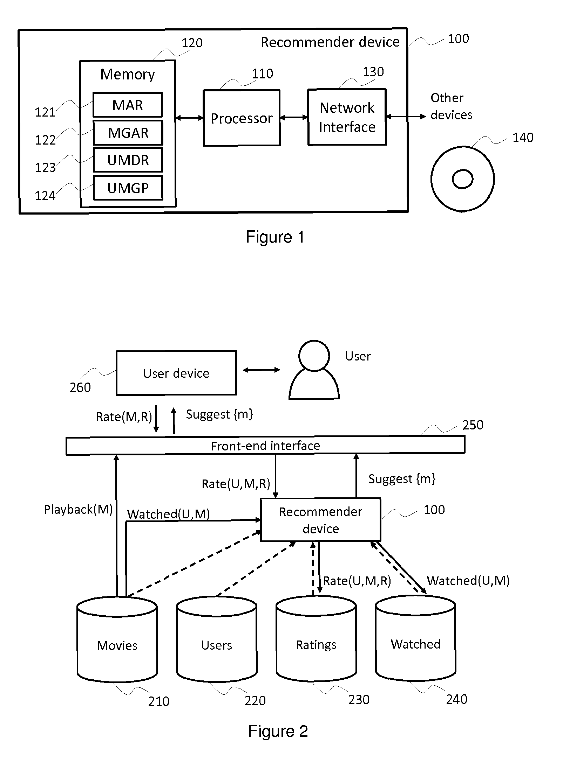

**Figure 1** illustrates an exemplary apparatus in which the disclosure may be implemented: the Recommender Device 100. The skilled person will appreciate that the illustrated device is very simplified for reasons of clarity. According to a specific and non-limiting embodiment of the principles, the Recommended Device 100 preferably comprises at least one hardware processor 110 configured to execute the method of at least one embodiment of the present disclosure, a Network Interface 130 configured to interact with other devices such as the databases and the user devices, and memory 120. Conventional communication interfaces such as Ethernet or Wifi constitute examples of network interface 130. Other network interfaces may be used, consistent with the spirit of the disclosure. These input interfaces may provide support for higher level protocols such as various Internet protocols or data exchange protocols in order to allow the device 100 to interact with other devices. The non-transitory computer readable storage medium 140 stores computer readable program code that is executable by the processor 110 to perform the method described herein.

In memory 120, the MAR 121 represents, for each movie, the average value of the ratings provided by users that rated the movie. Its size is equivalent to the number of movies. The MGAR 122 represents, for each genre, the average value of the ratings provided by the users that rated a movie of the selected genre. Its size is equivalent to the number of genres. The UMDR 123 represents, for each couple of a selected user and a selected movie, the difference between the ratings of the selected user for the selected movie and the average ratings for this movie. Its size is equivalent to the number of users multiplied by the number of movies. The UMGP 124 represents the computed profile of the users, providing for each user, the deviation of his average ratings for a given genre towards the average genre ratings for all the users. Its size is equivalent to the number of users multiplied by the number of genres.

**Figure 2** illustrates an exemplary system architecture in which the disclosure may be implemented. In such a system, the Movies Database 210 stores information about a set of movies. For each movie, multiple items of information are stored such as, for example, the title, the genre or set of genres of the movie, the name of the director, the name of the actors, a textual summary, a reference towards the corresponding audio/video stream as well as many other items of information needed either to inform and entertain the user but also allow the system to provide a movie delivery service. The Users Database 220 stores information related to the set of users. For each user, multiple items of information are stored such as, for example, his name, his address, his subscription identification number, his gender, his age as well as many other information allowing the system to provide him the movie delivery service. The Ratings Database 230 stores information related to the ratings of movies by the user. For each couple of movie and user, the value of the rating for the selected movie and the selected user is stored. For example, according to conventional rating principles, this value corresponds to an integer value comprised between 0 and 5. Low rating values indicate that the user did not like the movie while high rating values indicate that the user liked the movie. Advantageously, the computation of the average ratings for a given movie is computed and updated regularly, such as each time a new rating has been made. The Watched Database 240 stores information related to the movies that have been watched by the user. For each couple of movie and user, at least a Boolean flag is stored, being equal to true when the user has already watched the movie. Additional information can be associated with this flag such as the number of times the user watched this movie or also the different dates of the watching. The User enjoys the movie delivery service through the User Device 260. Television, Set Top Box, tablets and smartphones are examples of User Device 260. The User Device 260 interacts with a Front-end Interface 260 through a communication interface not illustrated in the figure. Internet and fourth generation mobile communication system are examples of communication interfaces. The Front-end Interface 260 controls the access to the movie delivery services and provides the relevant user interface to the users.

According to an alternative embodiment, the Ratings Database 230 is integrated in the Users Database 220, for example through the addition of, for each user, a table referencing all the movies rated by a given user and providing the rating information. Similarly, according to an alternative embodiment, the Watched Database 240 is integrated in the Users Database 220, for example through the addition of, for each user, a table referencing all the movies watched by a given user.

In various embodiments, the MAR 121 is stored in the Movies Database 210 instead of being stored in the memory of the Recommender Device 100, the MGAR 122 is stored in the Movies Database 210, the UMDR 123 is stored in the Users database 220, and the UMGP 124 is stored in the Users database 220.

According to an alternative embodiment, at least one of the MAR 121, the MGAR 122 or the UMDR 123 is handled by a caching system instead of being stored in the memory of the Recommender Device 100.

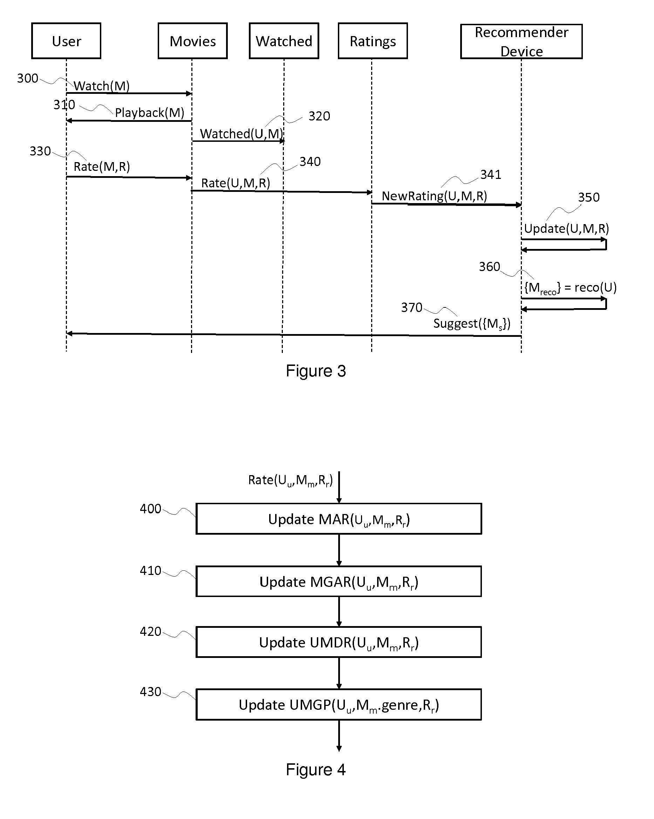

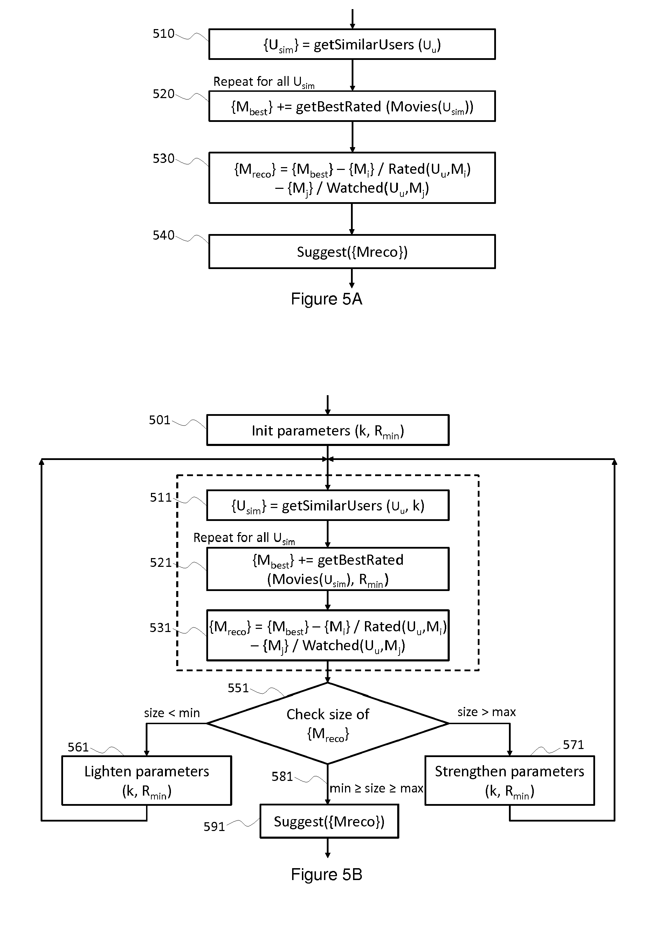

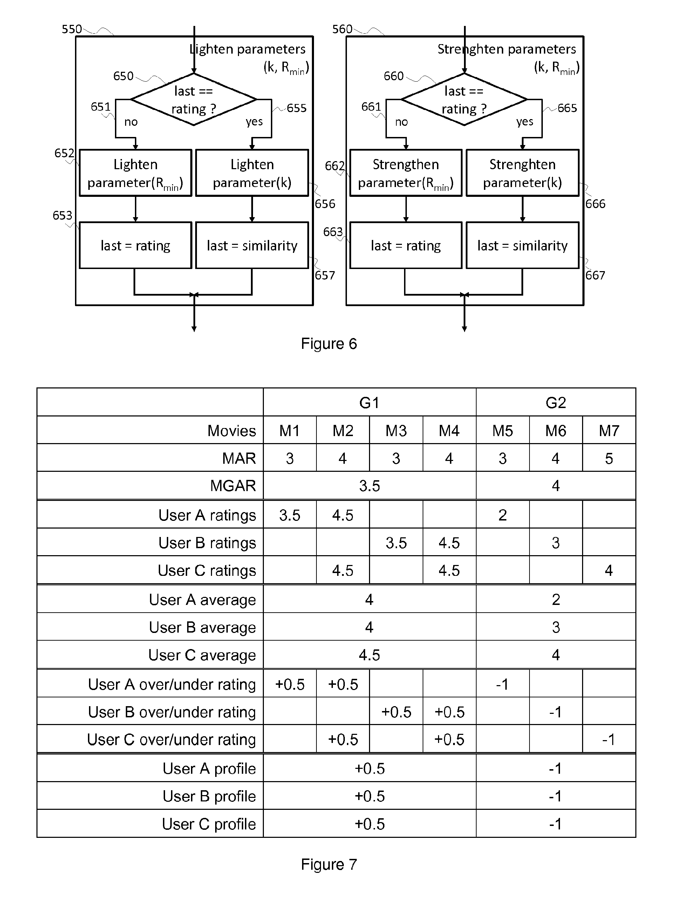

**Figure 3** illustrates an example of sequence diagram of the interactions required to operate the recommender system. In this figure, User is an abstraction for the devices through which the user accesses the movies. Similarly, Movies is an abstraction for both the Movies Database 210 and the devices delivering the movie audio visual content to the user and his devices. The user U, in step 300, wants to watch the movie M. The movie M is delivered to the user U in step 310. In step 320, the Watched Database 240 is updated with the information that user U watched movie M, resulting in setting the corresponding flag to true for the couple (U, M). After having watched the movie, in step 330, the user U rates the movie M with the value of the rating R. This rating is stored in the Ratings Database, in step 340, and notified to the Recommender Device 100, in step 341, which triggers an update. This update, in step 350, is detailed later, in figure 5. Basically, it allows to keep the knowledge of the Recommender Device 100 up to date. After that, in step 360, the Recommender Device 100 is able to deliver a recommendation that includes a list of suggested movies $M_s$ for the user U. Step 370 is detailed later, in figure 5 and 6. This recommendation is either done spontaneously by the Recommender Device 100 as illustrated in step 370 or is provided on a request performed by the user or one of the user's devices to the Recommender Device 100.

**Figure 4** illustrates an example of sequence diagram of the succession of updates performed by the recommender device. These updates are performed for example when a new rating is provided by a user. However updates can also be triggered recurrently to prevent any discrepancies. In step 400, the MAR 121 is updated by the reception of a new rating for the user U and the movie M, where the value of the rating is R. As a reminder, the MAR represents the average value of the ratings provided by users that rated the movies. Preferably, the MAR 122 comprises a count value, hereafter named $C_{MAR}$, indicating how many ratings have already been performed for each movie, avoiding to count and sum up the values for each update and therefore minimizing the processing time. The value of the average rating for a movie M, hereafter named MAR[M], is computed as following:

$$MAR[M] = \frac{((C_{MAR} * MAR[M]) + R)}{C_{MAR} + 1}$$

After this computation, the count value $C_{MAR}$ is incremented. When the count value $C_{MAR}$ is not available, the update operation requires to obtain the ratings for all movies, count them and sum them up to compute the average.

In step 410, the MGAR 122 is updated using the same parameters of user U, movie M and rating value R. As a reminder, the MGAR 122 represents, for each genre, the average value of the ratings provided by the users that rated a movie of the selected genre. First, the genre of the movie M is determined, hereafter named G, for example by checking the value of the genre parameter in the Movies Database 210. Preferably, the MGAR 122 comprises a count value, hereafter named $C_{MGAR}$, indicating how many ratings have already been performed for each genre, avoiding to count and sum up the values for each update and therefore minimizing the processing time. The value of the average rating for genre G, hereafter named MGAR[G], is computed as following:

$$MGAR[G] = \frac{((C_{MGAR} * MGAR[G]) + R)}{C_{MGAR} + 1}$$

After this computation, the count value $C_{MGAR}$ is incremented. When the count value $C_{MGAR}$ is not available, the update operation requires to obtain the ratings for all movies for the genre G, count them and sum them up to compute the average.

In step 420, the UMDR 123 is updated using the same parameters of user U, movie M and rating value R. As a reminder, the UMDR 123 represents, for each couple of a selected user and a selected movie, the difference between the ratings of the selected user for the selected movie and the average ratings for this movie. It is simply calculated as the difference between R and MAR[M]:

$$UMDR[U, M] = R - MAR[M]$$

In step 430, the UMGP 124 is updated using the same parameters of user U, movie M and rating value R. As a reminder, the UMGP 124 represents the computed profile of the users, providing for each user, the deviation of his average ratings for a given genre towards the average genre ratings for all the users. Preferably, the UMGP 124 comprises a count value, hereafter named $C_{UMGP}$, indicating how many ratings have already been performed for each genre, avoiding to count and sum up the values for each update and therefore minimizing the processing time. The profile of the average rating for genre G, hereafter named UMGP[G], is computed as following:

$$UMGP[U,G] = \frac{((C_{UMGP} * UMGP[U,G]) + UMDR[U,M])}{C_{UMGP} + 1}$$

After this computation, the count value $C_{UMGP}$ is incremented. When the count value $C_{UMGP}$ is not available, the update operation requires to obtain the differential ratings of user U for all movies for the genre G, count them and sum them up to compute the average.

**Figure 5A** illustrates an example of sequence diagram of the recommendation operation performed by the recommender device. As already mentioned, this recommendation is either done spontaneously by the Recommender Device 100 as illustrated in step 370 of figure 3 or is provided on a request performed by the user or one of the user's devices to the Recommender Device 100. It consists in selecting, for one user $U_U$, a list of movies not yet watched and that are best rated by users with similar tastes. It is basically split in three steps: select a list of users whose profile are similar to the user's profile, in step 510, obtaining the list of best rated movies from the selected users, in step 520, and filter out the movies already watched by the user, in step 530.

In step 510, the list of users with similar profile are selected. This is done by comparing the UMGP of user $U_u$ to all others UMGP and selecting the closest profiles. UMGP information can be considered as a vector so that this step comprises finding the closest vectors, in other words, the vectors with closest distance to UMGP[$U_u$]. The Cosine similarity technique can be used for this purpose. It provides a measure of the similarity distance, called the cosine factor k. The cosine factor indicates the quality of the closeness by providing values between 0 and 1: a Cosine factor of 1 represents a perfect similarity while Cosine factors higher than 0.7 are generally considered as representing high similarity. Step 510 comprises therefore comparing all user profiles vectors contained in UMGP to the UMGP vector of user Uu using the Cosine similarity and selecting the users where the cosine factor is higher than a threshold value. This threshold value is for example set to 0.7. The operation results in a list of similar users {$U_{sim}$}. The person skilled in the art may appreciate that other suitable vector distance calculation algorithms can be used for this purpose.

In step 520, for each user present in the list of similar users {$U_{sim}$}, his list of rated movies is analysed and the highest rated movies are selected according to a threshold of minimal rating. In conventional movie rating systems ranging from 1 to 5, a rating value of 4 or 5 is considered as good rating. Therefore the threshold of minimal rating is for example set to 4. This operation results in a list of best rated movies from similar users {$M_{best}$}.

In step 530, the list of best rated movies from similar users {$M_{best}$} is analysed and the movies already watched by the user $U_u$ are removed from the list of results. For that purpose, for all movies $M_j$, the value of the flag in the Watched Database 240 for the couple ($U_u$, $M_j$) is checked and when this flag is true, the corresponding movie is removed. This operation results in a list of recommended movies {$M_{reco}$} for the user $U_u$. Movies that have been rated by the user are also removed.

In step 540, this list is proposed to the user in the appropriate manner, for example by showing the corresponding movie posters in a dedicated area of the screen when the user is using his device 260 to browse through a movie delivery service offer.

**Figure 5B** illustrates a second example of sequence diagram of the recommendation operation performed by the recommender device that includes an iteration loop to deliver the appropriate number of elements. Indeed, in any recommendation operations, there is a trade-off to be found between quality and quantity. If the quality requirement are too high, both in terms of similarity between users and minimal level of ratings, then the recommender device may provide few results, and possibly no result at all. In the opposite case, if the quality requirements too low, the system will provide too many recommendations to be useful. This number of results is related to the number of elements to be displayed as recommendation. Typically, a recommendation list of ten movies is a good trade-off. There are multiple ways to impact the number of recommendations: the level of proximity between users can be adjusted as well as the level of minimal ratings. For that purpose, the figure 6 includes an iteration loop controlled by the number of movies to recommend and includes steps similar to those of figure 5 but with additional variable parameters k controlling the level of proximity and $R_{min}$ controlling the minimal level of ratings. In step 501, the variable parameters k and $R_{min}$ are initialized to default values, for example 0.7 for k and 4 for $R_{min}$. In step 511, the list of users with similar profile are selected. This is done by comparing the UMGP of user $U_u$ to all others UMGP and selecting the profiles for which the cosine factor is higher than k. In step 521, for each user present in the list of similar users {$U_{sim}$}, his list of rated movies is analysed and movies with ratings higher than $R_{min}$ are selected. In step 531, the list of best rated movies from similar users {$M_{best}$} is analysed and the movies already watched or rated by the user $U_u$ are removed from the list of results. In step 551, the size of the list of recommended movies is checked. When the number of movies of the list is higher than a threshold, for example 30, the parameters are strengthened, in step 561, and the process is restarted with tougher parameters, more likely to result in a lower number of movies. Similarly, when the number of movies listed are lower than a threshold, for example 5, the parameters are weakened, in step 571 and the process is restarted with weaker parameters, more likely to result into more movies. When the number of movies listed are lower than a first threshold and higher than a second threshold, the list is considered as of appropriate length and the iteration is stopped. The list can be provided to the user as a list of recommended movies, in step 591.

The parameters to be strengthened or weakened during the iteration are the similarity of users (cosine factor k) and the minimal level of rating $R_{min}$. These parameters are adjusted in steps 561 or 571, either by increasing their values to strengthen the selection in order to return less movies or by reducing their values to weaken the selection in order to return more movies.

Initial values for cosine value k is for example 0.7. Weakening and strengthening for example change the value by a factor of 10%, so multiplying the value by 1.1 to strengthen it and 0.9 to weaken it. In another example, the value is changed by adding 0.05 to strengthen it and subtracting 0.05 to weaken it.

Initial values for minimal level of rating $R_{min}$ is for example 4. Weakening and strengthening for example change the value by steps of 0.2, so adding the value of 0.2 to strengthen it and subtracting 0.2 to weaken it. Another example, the value is changed by multiplying the value by 1.1 to strengthen it and 0.9 to weaken it.

Since the strengthening or the weakening of the parameters is done on two parameters, a first solution is to adjust both parameters simultaneously. Another solution is to adjust them alternatively, as detailed in Figure 6.

**Figure 6** illustrates an example of alternative parameter adjustment, both for strengthening and for weakening the parameters. The left part of the diagram corresponds to the weakening of the parameters, previously referenced as step 550 in figure 5B. A variable named "last" stores a value to reflect the last parameter that has been modified. In step 650, this variable is checked. If its value was equal to "rating", in branch 655, then the last parameter modified was the rating and therefore this time, the similarity parameter will be weakened, in step 656 and the "last" variable value will be changed to "similarity", in step 657. In step 650, if value of the "last" variable was not equal to "rating", in branch 651, then the last parameter modified was the similarity and therefore this time, the rating parameter will be weakened, in step 652 and the "last" variable value will be changed to "rating", in step 653. The left part of the diagram corresponds to the strengthening of the parameters, previously referenced as step 560 in figure 5B. In step 660, the variable "last" is checked. If its value was equal to "rating", in branch 655, then the last parameter modified was the rating and therefore this time, the similarity parameter will be strengthened, in step 666 and the "last" variable value will be changed to "similarity", in step 667. In step 660, if value of the "last" variable was not equal to "rating", in branch 661, then the last parameter modified was the similarity and therefore this time, the rating parameter will be strengthened, in step 662 and the "last" variable value will be changed to "rating" , in step 663.

**Figure 7** illustrates a table that highlights the effects of the disclosure principle on user similarity using an invented example made of a simple set of users and movies. It corresponds to a very small subset of the complete information handled by the recommender device. The table shows the ratings given by three users (A, B, C) on seven movies (M1 to M7) classified in two genres (G1, G2). The table is split horizontally in 5 sections. In the first section, the first line groups the movies into two genres G1 and G2, the second line lists the movies M1 to M7, the third line indicates the average ratings for movies M1 to M7 (MAR), as computed from the whole set of users and the fourth line comprises the average ratings for movies aggregated by genre (MGAR). The second section comprises the movie ratings for the three users A, B and C. It illustrates particularly that user A rated movies M1, M2 and M5 while user B rated M3, M4 and M6. Therefore users A and B did not rate any movie in common. Conventional collaborative filtering used in prior art recommender systems would therefore never consider these users as similar. The third section contains the average ratings per genre for the three users A, B and C. It illustrates that they have different average ratings. Prior art recommender systems based on similarity in average ratings would therefore never consider these users as similar. The fourth section contains the overrating or underrating of the rated movies for user A, B and C, per movie (UMDR). The fifth section contains the average of the fourth section providing an average of over/underrating per genre, corresponding to the user profile (UMGP). It illustrates particularly that users A, B, and C have identical profile since they overrated or underrated movies according their genres in the same manner. For example, for genre 2, all of them under rated the movies of this genre, although they didn't rate the same movies and had completely different average ratings for the genre. Since these three users have similar profiles, even identical in this case, the Recommender Device 100 will establish the list of recommendations based on those users. The list of recommended movies will therefore be {M4, M3} for user A, {M2, M1} for user B and {M1, M3} for user C. The table illustrates also that prior art recommender system would not be able to provide any recommendation based on this information. Moreover, the similarity between users is not only computed on movies liked by users but also regarding movies they disliked compared to the average users.

The table introduced in Figure 7 ideally resides in the memory of the Recommender Device 100. However, according to an alternative embodiment, some of the elements of this table are stored elsewhere, either in the different databases of the movie delivery system or in memory caches and are recomputed when required. This allows the system to scale to huge sizes of both users and movies.

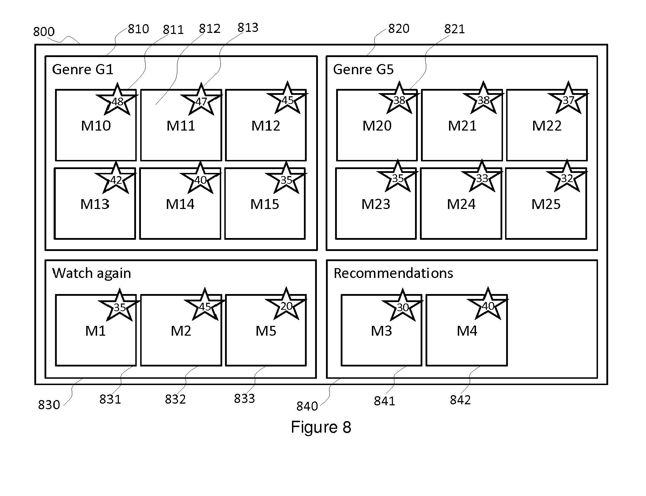

**Figure 8** illustrates an example of user interface displayed on the screen of the user device where a movie recommendation is provided to the user. The example corresponds to the data listed in the table of figure 7. The screen 800 is the user interface of a movie delivery service and corresponds to user A. The area 810 proposes a list of movies M10 to M15 of genre G1 and the area 820 proposes a list of movies M20 to M25 of genre G5. Each movie (811, 821, 831, 832, 833, 841, and 842) is represented by the corresponding movie poster (812) and the average rating value previously named MAR (813). The area 830 proposes the list of movies already watched by the user: M1, M2 and M5. The area 840 proposes the movies that are recommended to the user: M3 and M4 that have been selected according the process described above. The man skilled in the art will appreciate that it exists an infinity of other screen layouts fulfilling the same purpose.

The disclosure describes an example of application to movies wherein the categories used for the similarity measure are the movie genres. Other examples of categories are directors, actors, PEGI (Pan European Game Information) age restrictions, period of release, etc. The principle applies also to other kind of elements with the appropriate categories, for example physical goods categorized by type of usage, restaurants categorized by type of meals, concerts categorized by genre of music, amongst others.

As will be appreciated by one skilled in the art, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized. It will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

**Claims**

1. A method for operating a recommender system for a plurality of elements associated with categories, comprising at a processor (110) of a recommender device (100):

   - determining (430) a profile (124) of a first user by computing, for each element rated by the first user, a difference between a rating given by the first user and an average of ratings given by a plurality of further users, and averaging the differences according the plurality of categories of the elements;
   - selecting (510) a set of similar users, by computing a similarity level between profiles of the plurality of further users and the profile of first user and choosing the users for which the similarity is greater than a similarity threshold;
   - determining (520) a list of best rated elements, the list comprising elements that have been rated by the set of similar users and whose rating value is higher than a minimal rating threshold;
   - removing (530) elements already consumed or rated by the first user from the list of best rated elements to obtain a recommendation list; and
   - providing (370) the recommendation list to the first user.

2. The method according to claim 1 wherein the elements are movies and the categories are chosen among movie genres, directors, actors, age restrictions, date.

3.  The method according to any of claim 1 or 2 wherein the profile similarity is computed using discrete cosine technique and the similarity threshold is a cosine factor.

4.  The method according to any of claims 1 to 3 wherein selecting the set of similar users (620) and determining a list of best rated elements (630) are iterative and comprise adapting threshold parameters until the number of best rated elements not already consumed or rated by the first user is comprised in a range of values (680), the adaptation comprising weakening (660) or strengthening (670) threshold parameters comprising the similarity threshold parameter used to select similar users and the minimal rating threshold parameter used to obtain the best rated elements.

5.  The method according to claim 4 wherein the adaptation of the threshold parameters performed in the iteration alternates between adapting the similarity threshold and adapting the minimal rating threshold.

6.  The method according to any of claims 1 to 5 further comprising receiving a new rating for an element given by a user.

7.  A data processing apparatus (100) for recommending elements to users, comprising:

    - a processor (110) configured to:
    - determine a profile (124) of a first user by computing, for each element rated by the first user, a difference between a rating given by the first user and an average of ratings given by a plurality of further users, and averaging the differences according the plurality of categories of the elements;
    - select a set of similar users, by computing a similarity level between profiles of the plurality of further users and the profile of first user and choosing the users for which the similarity is greater than a similarity threshold;
    - determine a list of best rated elements, the list comprising elements that have been rated by the set of similar users and whose rating value is higher than a minimal rating threshold;
    - remove elements already consumed or rated by the first user from the list of best rated elements to obtain a recommendation list; and
    - a network interface (130) configured to:

        - obtain the average of ratings given by the plurality of further users; and
        - provide the recommendation list to the first user.

8.  The data processing apparatus according to claim 7 wherein the elements are movies and the categories are chosen among movie genres, directors, actors, age restrictions, date.

9.  The data processing apparatus according to any of claims 7 or 8 wherein the processor (110) is configured to compute the profile similarity using discrete cosine technique and the similarity threshold is a cosine factor.

10. The data processing apparatus according to any of claims 7 to 9 wherein the processor (110) is configured to select the set of similar users and determine a list of best rated elements iteratively and comprise adapting the threshold parameters until the number of best rated elements not already consumed or rated by the first user is comprised in a range of values, the adaption comprising weakening or strengthening the threshold parameters comprising the similarity threshold parameter used to select similar users and the minimal rating threshold parameter used to obtain the best rated elements..

11. The data processing apparatus according to claim 11 wherein the processor (110) is configured to alternate between adapting the similarity threshold and adapting the minimal rating threshold when adapting the threshold parameters during the iteration.

12. Computer program comprising program code instructions executable by a processor (110) for implementing the steps of a method according to at least one of claims 1 to 6.

13. Computer program product which is stored on a non-transitory computer readable medium (140) and comprises program code instructions executable by a processor (110) for implementing the steps of a method according to at least one of claims 1 to 6.

Recommender device 100

120

Memory

121 — MAR

122 — MGAR

123 — UMDR

124 — UMGP

110
Processor

130
Network Interface

Other devices

140

Figure 1

260 User device

User

Rate(M,R)  Suggest {m}

250
Front-end interface

Playback(M)  Watched(U,M)

Rate(U,M,R)

Suggest {m}

Recommender device  100

Rate(U,M,R)  Watched(U,M)

Movies  Users  Ratings  Watched

210  220  230  240

Figure 2

300 Watch(M)

310 Playback(M)

320 Watched(U,M)

330 Rate(M,R)

340 Rate(U,M,R)

341 NewRating(U,M,R)

350 Update(U,M,R)

360 {M$_{reco}$} = reco(U)

370 Suggest({M$_s$})

| User | Movies | Watched | Ratings | Recommender Device |

Figure 3

Rate(U$_u$,M$_m$,R$_r$)

400 Update MAR(U$_u$,M$_m$,R$_r$)

410 Update MGAR(U$_u$,M$_m$,R$_r$)

420 Update UMDR(U$_u$,M$_m$,R$_r$)

430 Update UMGP(U$_u$,M$_m$.genre,R$_r$)

Figure 4

510  $\{U_{sim}\} = getSimilarUsers (U_u)$

Repeat for all $U_{sim}$

520  $\{M_{best}\} += getBestRated (Movies(U_{sim}))$

530  $\{M_{reco}\} = \{M_{best}\} - \{M_i\} / Rated(U_u,M_i)$
$- \{M_j\} / Watched(U_u,M_j)$

540  $Suggest(\{Mreco\})$

Figure 5A

501  Init parameters $(k, R_{min})$

511  $\{U_{sim}\} = getSimilarUsers (U_u, k)$

Repeat for all $U_{sim}$

521  $\{M_{best}\} += getBestRated$
$(Movies(U_{sim}), R_{min})$

531  $\{M_{reco}\} = \{M_{best}\} - \{M_i\} / Rated(U_u,M_i)$
$- \{M_j\} / Watched(U_u,M_j)$

551  Check size of $\{M_{reco}\}$

size < min

size > max

561  Lighten parameters $(k, R_{min})$

571  Strengthen parameters $(k, R_{min})$

581  min ≥ size ≥ max

591  $Suggest(\{Mreco\})$

Figure 5B

Figure 6

|  | G1 | | | | G2 | | |
|---|---|---|---|---|---|---|---|
| Movies | M1 | M2 | M3 | M4 | M5 | M6 | M7 |
| MAR | 3 | 4 | 3 | 4 | 3 | 4 | 5 |
| MGAR | 3.5 | | | | 4 | | |
| User A ratings | 3.5 | 4.5 | | | 2 | | |
| User B ratings | | | 3.5 | 4.5 | | 3 | |
| User C ratings | | 4.5 | | 4.5 | | | 4 |
| User A average | 4 | | | | 2 | | |
| User B average | 4 | | | | 3 | | |
| User C average | 4.5 | | | | 4 | | |
| User A over/under rating | +0.5 | +0.5 | | | -1 | | |
| User B over/under rating | | | +0.5 | +0.5 | | -1 | |
| User C over/under rating | | +0.5 | | +0.5 | | | -1 |
| User A profile | +0.5 | | | | -1 | | |
| User B profile | +0.5 | | | | -1 | | |
| User C profile | +0.5 | | | | -1 | | |

Figure 7

13

Figure 8

Europäisches
Patentamt

European
Patent Office

Office européen
des brevets

# EUROPEAN SEARCH REPORT

Application Number

EP 15 30 6792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical features, namely a data processing apparatus comprising a processor and a network interface, are therefore considered to be part of the notorious knowledge, for which no documentary evidence is deemed necessary. (see Guidelines for Examination in the European Patent Office, B-VIII, 2.2.1) ----- | | INV.<br>G06Q30/02<br>G06Q30/06<br>H04N21/466<br>G06F17/30 |
| | | | TECHNICAL FIELDS SEARCHED (IPC) |
| | | | G06Q<br>H04N<br>G06F |

The present search report has been drawn up for all claims

| Place of search | Date of completion of the search | Examiner |
|---|---|---|
| The Hague | 15 April 2016 | Tiago Pinheiro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)